# EUROPÄISCHE PATENTANMELDUNG

(11) **EP 3 486 594 A1**
(43) Veröffentlichungstag der Anmeldung: **22.05.2019**
(21) Anmeldenummer: 17202011.7
(22) Anmeldetag: 16.11.2017
(51) Int. Cl.: F28D 20/00

(54) **ANORDNUNG ZUR SPEICHERUNG VON THERMISCHER ENERGIE**

(71) Anmelder: Siemens Wind Power GmbH & Co. KG, 20097 Hamburg (DE)
(72) Erfinder: Inhetveen, Patrick, 30982 Pattensen (DE)
(74) Vertreter: Aspacher, Karl-Georg

(57) **Zusammenfassung**

Die Erfindung betrifft eine Anordnung zur Speicherung von thermischer Energie, die einen räumlich ausgestalteten Wärmespeicher aufweist. Dieser beinhaltet ein festes natürliches Material zur Wärmespeicherung. Das Wämespeicher-Material ist von einer Fluid-undurchlässigen, flexiblen Schicht derart umfasst, dass das Wämespeicher-Material mit Blick auf die Umwelt des Wärmespeichers zumindest druckdicht isoliert ist. Eine flexible Deckschicht ist vorgesehen, die mit der Fluid-undurchlässigen flexiblen Schicht derart gekoppelt ist, dass die flexible Deckschicht eine Flächenkraft auf die Fluid-undurchlässige, flexible Schicht aufbringt. Dadurch wird die Fluid-undurchlässige, flexible Schicht flächig auf das Wärmespeichermaterial gedrückt.

## Beschreibung

Die Erfindung betrifft eine Anordnung zur Speicherung von thermischer Energie.

Bei einem hohen Anteil an erneuerbarer Energie (Windenergie, Sonnenenergie, Gezeitenenergie, etc.) in einem Energieversorgungsnetz wird es zunehmend wichtiger, die erneuerbare Energie zwischenzuspeichern, um die Verfügbarkeit der erneuerbaren Energie mit den Erfordernissen der Netzstabilität und dem Verbraucherverhalten sinnvoll zu kombinieren.

Es ist bekannt, gewonnene elektrische Energie in thermische Energie (Hitze) umzuwandeln und in einem Wärmespeicher zeitlich begrenzt zwischenzuspeichern.

Es sind Wärmespeicher bekannt, bei denen feste Materialien als Speichermaterial verwendet werden - beispielsweise Steine oder Keramik bzw. Geröll. Ein erhitztes Fluid - zum Beispiel elektrisch aufgeheizte Luft - wird als Hitze-Übertragungsmedium verwendet und in den Wärmespeicher eingeleitet. Das feste Speichermaterial des Wärmespeichers wird aufgeheizt und zur zeitlichen Energiespeicherung verwendet.

Entsprechend wird bei einer Energieentnahme aus dem Wärmespeicher ein (kühles) Fluid wie Luft in den Wärmespeicher geblasen, darin aufgeheizt und nachfolgend einem Wandlersystem zugeführt. Das Wandlersystem wandelt die aus dem Wärmespeicher über das Fluid (Luft) entnommene thermische Energie in elektrische Energie um.

Beispielsweise wird mit Hilfe der erhitzen Luft die entnommene thermische Energie über einen Wasserdampf-Kreislauf und unter Verwendung einer Dampfturbine in elektrische Energie umgewandelt.

Ein Wettbewerb-fähiges Energiespeichersystem hoher Effizienz muss hohe Dampfparameter (Temperatur T, Leistung P) gewährleisten. Dies kann nur erreicht werden, wenn thermische Energie unter Verwendung hoher Temperaturen gespeichert wird. Das zur Speicherung verwendete Material ist somit hohen und ggf. schnell erfolgenden Temperaturunterschieden ausgesetzt und muss damit einhergehend entsprechenden Belastungen (z.B. thermischen bzw. mechanischen Belastungen) widerstehen.

Es ist bekannt, das zur Speicherung verwendete Material mit einer Fluid-undurchlässigen, flexiblen Schicht gegenüber der Umwelt des Wärmespeichers zu isolieren bzw. abzudichten. Beispielsweise kommt zu diesem Zweck eine luftdichte Folie zum Einsatz, die derart angeordnet ist, dass Druck bzw. Temperatur innerhalb des Wärmespeichers erhalten bleiben.

Diese Fluid-undurchlässige, flexible Schicht wird durch den engen Kontakt mit dem zur Speicherung verwendeten Material den gleichen hohen und ggf. schnell erfolgenden Temperaturunterschieden ausgesetzt und muss damit einhergehend den entsprechenden Belastungen ebenfalls widerstehen können.

Zugleich muss diese Fluid-undurchlässige, flexible Schicht gewährleisten, dass das im Arbeitsmodus verwendete gesamte Volumen des Wärmespeichers erhalten bleibt, um ungewollte Effekte im Wärmespeicher (z.B. eine ungleichmäßige Temperaturverteilung im Speichervolumen oder die Bildung von unerwünschten Kanälen im Inneren des Wärmespeichers bzw. dessen Materials) zu verhindern.

Aufgrund der geforderten Funktion der Fluid-undurchlässigen Schicht muss mit Blick auf die Flexibilität sichergestellt werden, dass die Fluid-undurchlässige Schicht im Betrieb und damit unter Einwirkung von hohem Druck bzw. Temperatur dicht bleibt.

Wie oben angesprochen muss auch sichergestellt werden, dass die Fluid-undurchlässige Schicht im engen Kontakt mit dem zur Speicherung verwendeten Material bleibt.

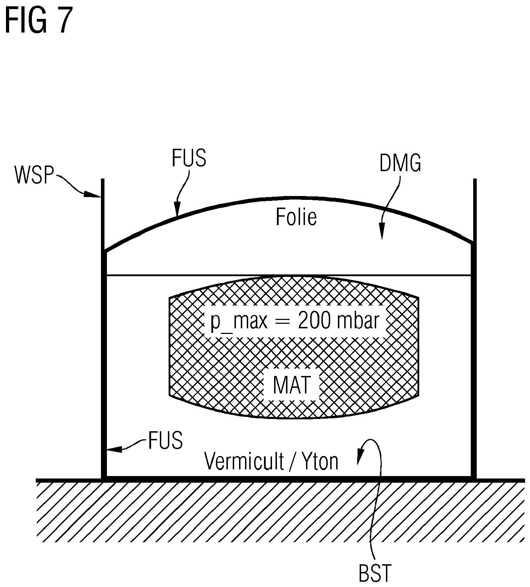

FIG 7 zeigt einen Querschnitt eines Wärmespeicher WSP, der gemäß dem Stand der Technik aufgebaut ist. Der Wärmespeicher WSP beinhaltet ein festes natürliches Material MAT zur Wärmespeicherung. Das Wämespeicher-Material MAT ist von einer Fluid-undurchlässigen, flexiblen Schicht FUS, einer Folie, derart umfasst, dass das Wämespeicher-Material MAT mit Blick auf die Umwelt des Wärmespeichers zumindest druckdicht isoliert ist.

Das Wärmespeicher-Material MAT ist innerhalb des Wärmespeichers WSP im unteren und im mittleren Bereich von einer formgebenden Basisstruktur BST gestützt, die beispielsweise Vermiculit oder Yton enthalten kann. Mit Hilfe der formgebenden Basisstruktur BST wird die Form und das Volumen des Wärmespeicher-Materials MAT im Wesentlichen definiert und damit die Wärmeaufnahme, die Wärmeabgabe sowie die Temperaturausbreitung im Inneren des Wärmespeichers WSP mit festgelegt.

Das Wärmespeicher-Material MAT ist innerhalb des Wärmespeichers WSP im oberen Bereich umfasst von einer Dämmung DMG, die zwischen dem Wärmespeicher-Material MAT und der Fluid-undurchlässigen, flexiblen Schicht FUS angeordnet ist. Mit Hilfe der Dämmung DMG wird einerseits ein enger Kontakt zwischen der Schicht FUS und dem Wärmespeicher-Material MAT hergestellt, andererseits wird durch die Dämmung DMG eine Beschädigung der Schicht FUS durch das Wärmespeicher-Material MAT vermieden.

Es ist die Aufgabe der vorliegenden Erfindung, einen bezüglich der Fluid-undurchlässigen Schicht optimierten Wärmespeicher anzugeben.

Diese Aufgabe der Erfindung wird durch die Merkmale des Anspruchs 1 gelöst.

Vorteilhafte Weiterbildungen der Erfindung sind in den abhängigen Ansprüchen angegeben.

Es wird eine Anordnung zur Speicherung von thermischer Energie beansprucht. Die Anordnung umfasst einen räumlich ausgestalteten Wärmespeicher, der ein festes natürliches Material zur Wärmespeicherung beinhaltet. Das Wämespeicher-Material ist von einer Fluid-undurchlässigen, flexiblen Schicht derart umfasst, dass das Wämespeicher-Material mit Blick auf die Umwelt des Wärmespeichers zumindest druckdicht isoliert ist.

Erfindungsgemäß ist eine flexible Deckschicht vorgesehen, die auf die Fluid-undurchlässige, flexible Schicht eine Flächenkraft aufbringt. Die Fluid-undurchlässige, flexible Schicht wird dadurch flächig und bevorzugt formschlüssig auf das Wärmespeichermaterial aufgedrückt.

Mit Hilfe der vorliegenden Erfindung wird vorteilhaft erreicht, dass trotz benötigter hoher Dampfparameter (Temperatur T, Leistung P) die Fluid-undurchlässige, flexible Schicht stets optimiert im engen Kontakt mit dem zur Wärmespeicherung verwendeten Material steht.
Auch bei hohen und ggf. schnell erfolgenden Temperaturunterschieden bleibt das Volumen des Wärmespeichermaterials bzw. das Gesamtvolumen des Wärmespeichers erhalten. Dadurch werden ungewollte Effekte im Wärmespeicher (z.B. eine ungleichmäßige Temperaturverteilung im Speichervolumen oder die Bildung von unerwünschten Kanälen im Inneren des Wärmespeichers bzw. dessen Materials) verhindert.

Zur Übertragung von thermischer Energie an das Wärmespeichermaterial und zur Entnahme von thermischer Energie aus dem Wärmespeichermaterial wird ein Fluid (beispielsweise Luft) verwendet. Der Wärmespeicher weist zumindest einen Eingang und zumindest einen Ausgang auf, über die das Fluid zur Energiespeicherung und zur Energieentnahme geleitet wird. Im Vergleich zur Temperatur des Wärmespeichermaterials heißeres, erhitztes Fluid wird zur Energiespeicherung über den Eingang in den Wärmespeicher eingeleitet. Dort wird thermische Energie vom Fluid an das Wärmespeichermaterial übertragen. Das kühlere Fluid wird über den Ausgang aus dem Wärmespeicher geleitet. Entsprechend wird - im Vergleich zur Temperatur des Wärmespeichermaterials - kühleres Fluid zur Energieentnahme über den Eingang in den Wärmespeicher eingeleitet. Dort wird thermische Energie vom Wärmespeichermaterial an das Fluid übertragen und das jetzt heißere Fluid wird über den Ausgang aus dem Wärmespeicher geleitet.

Bei der Energiespeicherung wird das im Vergleich zum Wärmespeicher Energie-reichere Fluid über zumindest eine Eingangsöffnung in den Wärmespeicher eingeleitet und darin derart geführt, dass das Wärmespeicher-Material durch das Fluid erhitzt wird. Mit Hilfe des Wärmespeicher-Materials wird also die über das Fluid zugeführte thermische Energie gespeichert. Das nach der Speicherung entsprechend Energie-ärmere bzw. kühlere Fluid wird über die zumindest eine Ausgangsöffnung aus dem Wärmespeicher geführt.

Bei der Energieentnahme wird im Vergleich zum Speichermaterial kühleres bzw. energieärmeres Fluid über zumindest eine Eingangsöffnung in den Wärmespeicher eingeleitet und darin derart geführt, dass das Wärmespeicher-Material das Fluid erhitzt. Mit Hilfe des Wärmespeicher-Materials wird also dem Fluid thermische Energie zugeführt. Das nach der Energieentnahme entsprechend Energie-reichere Fluid wird über zumindest eine Ausgangsöffnung aus dem Wärmespeicher geführt.

Nachfolgend wird die vorliegende Erfindung anhand von Figuren näher erläutert. Dabei zeigt:
- FIG 1: einen Querschnitt eines erfindungsgemäßen Wärmespeichers in einer prinzipiellen Darstellung,
- FIG 2: mit Bezug auf FIG 1 eine weitere Ausgestaltung der Erfindung,
- FIG 3: mit Bezug auf FIG 1 eine weitere Ausgestaltung der Erfindung
- FIG 4: mit Bezug auf FIG 3 eine alternative Ausgestaltung der Erfindung,
- FIG 5: mit Bezug auf FIG 1 eine alternative Ausgestaltung der Erfindung,
- FIG 6: mit Bezug auf FIG 3 eine weitere Ausgestaltung der Erfindung, und
- FIG 7: den in der Einleitung beschriebenen Querschnitt eines Wärmespeichers, der gemäß dem Stand der Technik aufgebaut ist.

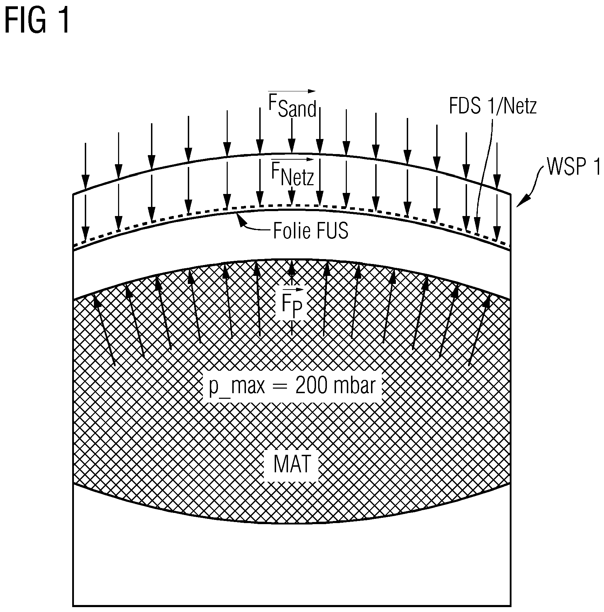

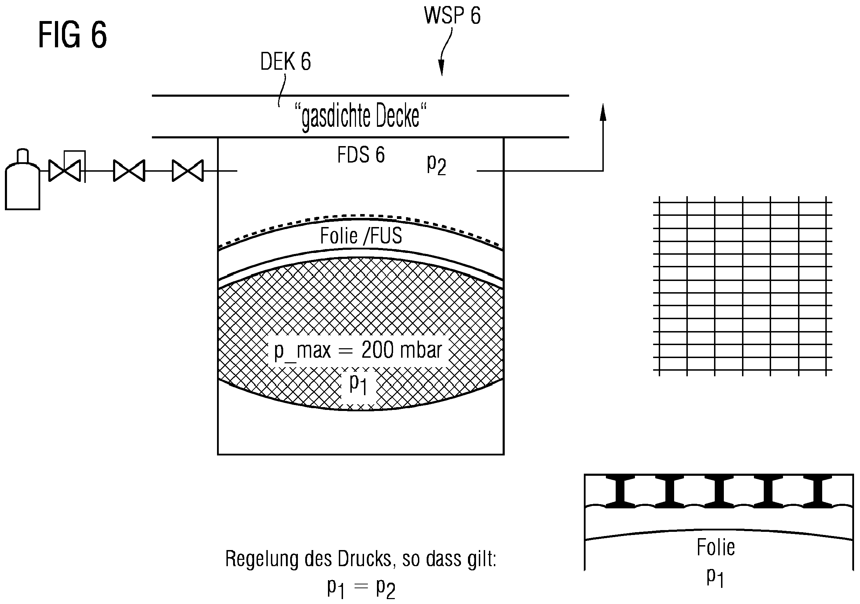

FIG 1 zeigt einen Querschnitt einer erste Ausgestaltung eines erfindungsgemäßen Wärmespeichers WSP1 in einer prinzipiellen Darstellung - die in FIG 6 gezeigte formgebende Basisstruktur BST sowie die Dämmung DMG sind hier und in den nachfolgenden Figuren nicht detailliert dargestellt, können jedoch an den entsprechenden Stellen vorgesehen sein bzw. angeordnet werden.

Der Wärmespeicher WSP1 beinhaltet ein festes natürliches Material MAT zur Wärmespeicherung. Das Wärmespeicher-Material MAT ist von einer Fluid-undurchlässigen, flexiblen Schicht FUS, hier beispielhaft einer Folie, derart umfasst, dass das Wärmespeicher-Material MAT mit Blick auf die Umwelt des Wärmespeichers WSP1 zumindest druckdicht isoliert ist.

Dadurch stellt sich im Betrieb beispielsweise im Inneren des Wärmespeichers WSP1 ein Druck von 200 mbar ein, der über resultierende Kräfte Fₚ flächig gleichmäßig verteilt letztlich auf die Folie FUS wirkt.

Erfindungsgemäß ist eine flexible Deckschicht FDS1 in Form eines Netzes vorgesehen, die auf die Folie FUS eine Flächenkraft F_{Netz} aufbringt. Das Netz ist hier als unterbrochene Linie oberhalb der Folie FUS angedeutet. Die Folie FUS wird damit flächig und bevorzugt formschlüssig auf das Wärmespeichermaterial MAT aufgedrückt.

Zur Erzeugung der Flächenkraft F_{Netz} wird beispielswiese eine Schicht aus Sand auf das Netz aufgebracht, so dass über das Eigengewicht des Sandes eine Flächenkraft F_{sand} = F_{Netz} gebildet wird.

Alternativ oder ergänzend dazu könnte das Netz auch aus entsprechend schwerem Material (Metall) gefertigt sein, um eine entsprechende Gewichtskraft F_{Gewicht} = F_{Netz} zu bilden.

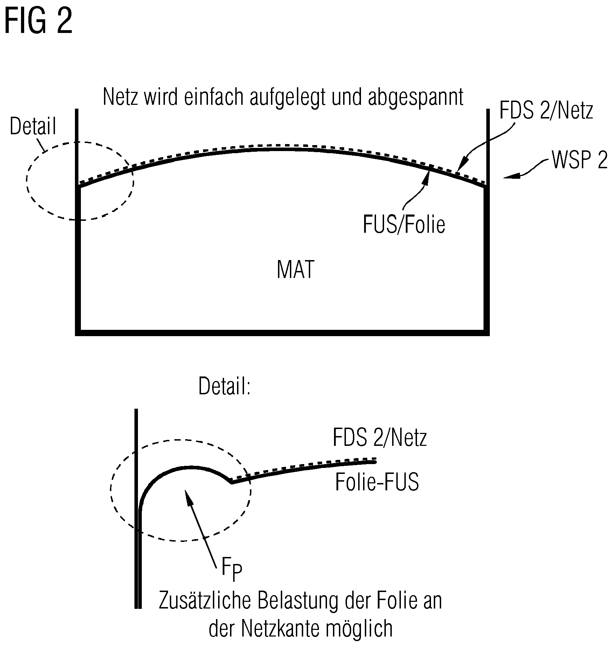

FIG 2 zeigt mit Bezug auf FIG 1 eine weitere Ausgestaltung der Erfindung. Bei dem hier gezeigten Wärmespeicher WSP2 wird ein Netz FDS2 nicht mit Hilfe einer Sandschicht, sondern mit Hilfe einer Abspannung (hier nicht näher dargestellt, z.B. mittels Spanngurten, etc.) auf die Folie FUS gepresst.

Im Detail wird eine bevorzugte Ausgestaltung der Kontaktsituation zwischen der Folie FUS und dem überhöhten Rand des Wärmespeicher WSP2 dargestellt. In diesem Übergangsbereich ist die Folie FUS zusätzlich (z.B. beulenförmig) ausgeformt, um einwirkende Kräfte F_{P} kompensieren zu können. Entsprechend ist die Folie FUS in diesem Bereich frei vom Netz FDS2.

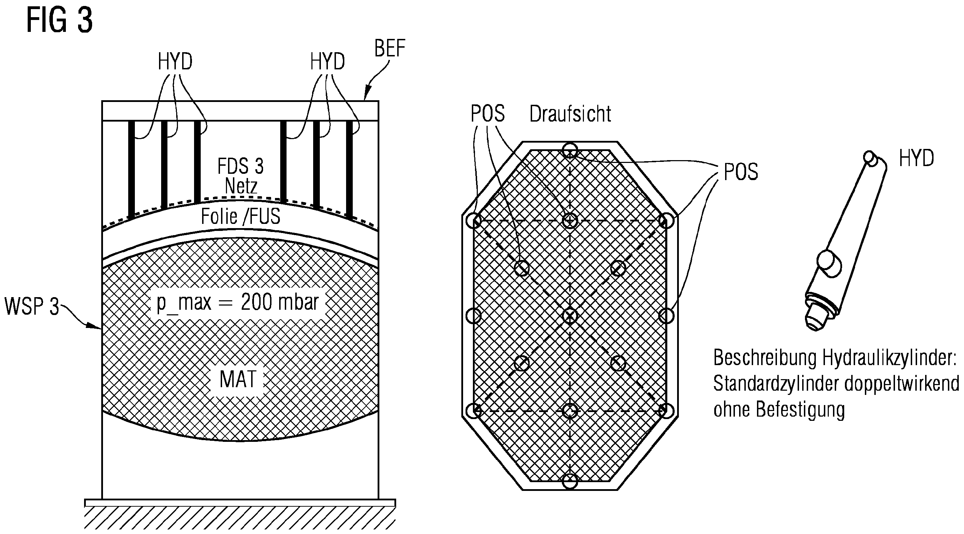

FIG 3 zeigt mit Bezug auf FIG 1 eine weitere Ausgestaltung der Erfindung. Bei dem hier gezeigten Wärmespeicher WSP3 wird ein Netz FDS3 nicht mit Hilfe einer Sandschicht, sondern mit Hilfe von Hydraulikzylindern HYD auf die Folie FUS gepresst.

In der Draufsicht sind jeweilige Positionspunkte POS zu sehen, an denen jeweilige Hydraulikzylindern HYD angeordnet sind, um vertikal ausgerichtete Kräfte auf die Folie FUS mit einem Ende des Hydraulikzylinders HYD auszuüben. Entsprechend sind zu diesem Zweck die Hydraulikzylinder HYD mit ihrem anderen Ende an einer Befestigungseinrichtung (z.B. an einer Decke des Wärmespeicher WSP3) befestigt.

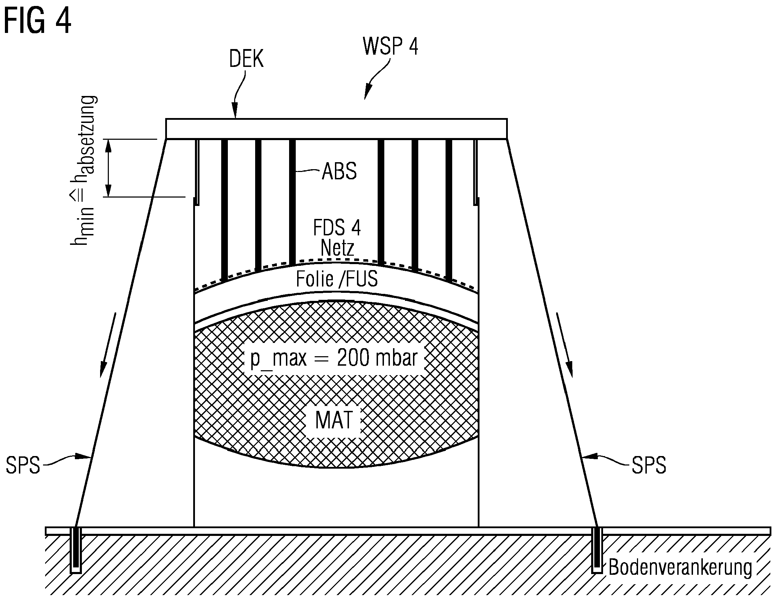

FIG 4 zeigt mit Bezug auf FIG 3 eine alternative Ausgestaltung der Erfindung in einer leichten Abwandlung.

Bei dem hier gezeigten Wärmespeicher WSP4 wird ein Netz FDS4 nicht mit Hilfe von Hydraulikzylindern, sondern mit Hilfe einer beweglichen Decke DEK des Wärmespeicher WSP4 auf die Folie FUS gepresst.

Die Decke gleitet an überhöhten Seitenrändern des Wärmespeicher WSP4 entlang, wobei eine entsprechende Gewichtskraft der Decke DEK über Spannseile SPS erhöht wird.

Über die Spannseile SPS und mit Hilfe von vorgeformten, definierten Abstandshaltern ABS wird die Position der Decke DEK in Bezug auf die Folie FUS sowie die benötigte Flächenkraft definiert.

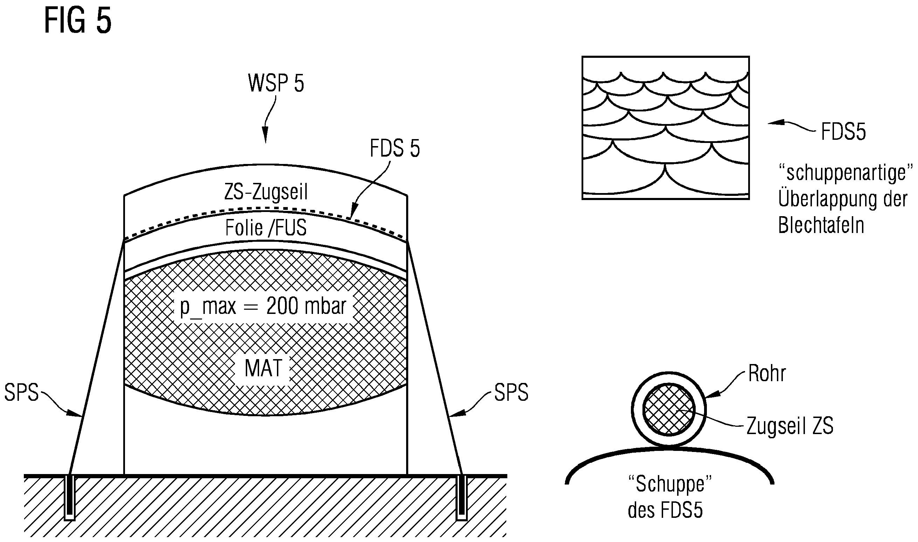

FIG 5 zeigt mit Bezug auf FIG 1 eine alternative Ausgestaltung der Erfindung in einem weiteren Querschnitt.

Der Wärmespeicher WSP5 beinhaltet ein festes natürliches Material MAT zur Wärmespeicherung. Das Wärmespeicher-Material MAT ist von einer Fluid-undurchlässigen, flexiblen Schicht FUS, hier beispielhaft einer Folie, derart umfasst, dass das Wärmespeicher-Material MAT mit Blick auf die Umwelt des Wärmespeichers WSP5 zumindest druckdicht isoliert ist.

Erfindungsgemäß ist hier eine Schuppenpanzer-förmige, zumindest teil-flexible Deckschicht FDS5 vorgesehen, die schuppenartig überlappende Blechtafeln aufweist - vgl. hierzu das in FIG 5 gezeigte Detail.

Die Folie FUS wird damit flächig und bevorzugt formschlüssig auf das Wärmespeichermaterial MAT aufgedrückt.

Zur Erzeugung der benötigten Flächenkraft werden Zugseile ZS in jeweiligen Rohren über die Schuppen der Deckschicht FDS5 verlegt. Diese Zugseile ZS werden wiederum über Spannseile SPS angespannt, so dass die schuppenartig überlappenden Blechtafeln FDS5 auf die Folie FUS drücken.

FIG 6 zeigt mit Bezug auf FIG 3 eine weitere Ausgestaltung der Erfindung. Bei dem hier gezeigten Wärmespeicher WSP6 wird eine Gas-dichte Netzstruktur FDS6 mit Hilfe von Gasdruck auf die Folie FUS gepresst.

In dieser Ausgestaltung weist der Wärmespeicher WSP6 eine Gas-dichte Decke DEK6 auf.

## Patentansprüche

1. Anordnung zur Speicherung von thermischer Energie,
- mit einem räumlich ausgestalteten Wärmespeicher, der ein festes natürliches Material zur Wärmespeicherung beinhaltet,
- bei dem das Wämespeicher-Material von einer Fluid-undurchlässigen, flexiblen Schicht derart umfasst ist, dass das Wämespeicher-Material mit Blick auf die Umwelt des Wärmespeichers zumindest druckdicht isoliert ist,
**dadurch gekennzeichnet,**
- **dass** eine flexible Deckschicht vorgesehen ist, die mit der Fluid-undurchlässigen flexiblen Schicht derart gekoppelt ist, dass die flexible Deckschicht eine Flächenkraft auf die Fluid-undurchlässige, flexible Schicht aufbringt, so dass die Fluid-undurchlässige, flexible Schicht flächig auf das Wärmespeichermaterial drückt.

2. Anordnung nach Anspruch 1, **dadurch gekennzeichnet, dass** die Fluid-undurchlässige flexible Schicht (FUS) eine Folie ist.

3. Anordnung nach Anspruch 1 oder 2, **dadurch gekennzeichnet, dass** die flexible Deckschicht die Form eines Netzes aufweist.

4. Anordnung nach Anspruch 3, **dadurch gekennzeichnet, dass** zur Erzeugung der Flächenkraft eine Schicht aus Sand auf das Netz derart aufgebracht ist, um das Netz auf die Folie zu drücken.

5. Anordnung nach Anspruch 3, **dadurch gekennzeichnet, dass** zur Erzeugung der Flächenkraft das Netz aus schwerem Material, insbesondere aus Metall, gefertigt ist.

6. Anordnung nach Anspruch 3, **dadurch gekennzeichnet, dass** zur Erzeugung der Flächenkraft Spanngurte derart vorgesehen sind, dass das Netz mit Hilfe der Spanngurten auf die Folie gepresst wird.

7. Anordnung nach Anspruch 3, **dadurch gekennzeichnet, dass** zur Erzeugung der Flächenkraft Hydraulikzylindern derart vorgesehen sind, dass das Netz mit Hilfe der Hydraulikzylindern auf die Folie gepresst wird.

8. Anordnung nach Anspruch 3, **dadurch gekennzeichnet, dass** zur Erzeugung der Flächenkraft die Decke des Wärmespeichers derart beweglich ausgestaltet ist, dass die bewegliche Decke auf die Folie gepresst wird.

9. Anordnung nach Anspruch 1 oder 2, **dadurch gekennzeichnet, dass** die flexible Deckschicht in Form von schuppenartig überlappenden Blechtafeln ausgebildet ist.
